# EUROPÄISCHE PATENTSCHRIFT

(11) **EP 2 048 419 B1**
(45) Veröffentlichungstag und Bekanntmachung des Hinweises auf die Patenterteilung: **05.03.2014**
(21) Anmeldenummer: 08166277.7
(22) Anmeldetag: 09.10.2008
(51) Int. Cl.: F16K 31/126, F16K 31/40, F17D 5/06

(54) **Eigenmediumgesteuertes Absperrventil**
Own-medium-controlled blocking valve
Soupape d'arrêt commandée par le fluide propre

(30) Priorität: 09.10.2007 DE 102007048365
(43) Veröffentlichungstag der Anmeldung: 15.04.2009
(73) Patentinhaber: smartGAS Mikrosensorik GmbH, 74076 Heilbronn (DE)
(72) Erfinder: Berger, Wolfgang, 32257 Bünde (DE); Stein, Christian, 58809 Neuenrade (DE); Wiegleb, Gerhard, 58849 Herscheid (DE)
(74) Vertreter: Lippert, Stachow & Partner

(56) Entgegenhaltungen:
- WO-A-96/11350
- DE-U1- 20 110 758
- US-A- 6 105 607
- US-B1- 6 415 815

## Beschreibung

Die Erfindung betrifft ein eigenmediumgesteuertes Sicherheitsventil mit einem Einlass für das Medium, einem Auslass für das Medium zur Weiterführung an einen Verbraucher, einer in einem Membrangehäuse angeordneten Membran, die mit einem federgespannten Schließelement zur Regelung des Hauptstroms des Mediums verbunden ist, und einem den Einlass mit dem Membrangehäuse verbindenden Bypasskanal zur Regelung des Schließelements und einem elektrisch geschalteten Pilotventil, das den Mediumstrom in dem Kanal steuert, wobei das Pilotventil eine gesonderte Austrittsöffnung aufweist.

Ein solches Absperrventil stellt eine Armatur dar, die es ermöglicht, Verbindungsleitungen derart zu sichern, dass bei einem Defekt oder einer Manipulation an der Verbindungsleitungen die Armatur selbsttätig die Unterbrechung des Mediumstroms vornimmt und dadurch ein Ausströmen aus der defekten Rohrleitung verhindert. Insofern steuert das Medium selbst das Absperrventil. Die Medien können gasförmig oder flüssig sein.

Ventile für andere Aufgaben, z.B. zur Überdruckregelung oder zum Schalten in den Verbrauchern selbst, z.B. in Toilettenspülungen und Duschen, sind aus US 6 415 815 B1 bzw. WO 96/11350 bekannt.

In der Regel werden Verbindungsleitungen an den Einlass und den Auslass angeschlossen zur Verbindung zwischen einem Versorger (Gaszähler oder Hauptleitung) und einem Verbraucher (z.B. Gaskessel). Diese Verbindungsleitungen werden häufig als einwandige Kupfer-, Stahl-, oder Kunststoffrohrleitungen ausgebildet. Die Verbindungen werden gelötet, verschweißt, verschraubt oder verpresst.

Bei einem technischen Defekt oder einer Manipulation der Verbindungsleitungen kann das Medium ungehindert austreten, z.B. in einen Kellerraum. Im Falle von Gas kann sich somit ein explosives Gemisch bilden.

Zur Vermeidung dieses Nachteils schlägt das deutsche Gebrauchsmuster DE 201 10 758 bereits die Eigenmediumsteuerung des Absperrventils in einer Weise vor, dass bei einer Beschädigung der doppelwandigen Auslassleitung das Abwehrsperrventil automatisch aufgrund des Druckabfalls des Mediums in dem Membrangehäuse schließt.

Obgleich dieses eigenmediumgesteuerte Sicherheitsventil bereits eine deutlich höhere Sicherheit gegen ungewollte Austritte des Mediums bietet, ist gleichwohl eine relativ aufwendige Auslassleitung erforderlich, da diese als konzentrische Doppelleitung ausgebildet sein muss. Ferner kann im Störfall durch den Kanal eine Leckage von zusätzlich ca. 30 Litern pro Stunde erfolgen.

Ein weiteres eigenmediumgesteuertes Absperrventil ist aus der US 6 105 607 A bekannt. Dieses offenbart ein elektronisch gesteuertes Pilotventil. Die Schließvorrichtung wird durch ein handelsübliches Ventil bewerkstellig. Zum schließen eines Ventil dieses Typs ist ein Nachfließen des Mediums durch ein sehr kleines Loch im Diafragmar des Ventils nötig.

US 6 026 836, dass die Merkmale des Oberbegriffs des Anspruchs 1 zeigt, offenbart ebenfalls ein Absperrventil mit einem elektrisch geschalteten Pilotventil.

Ausgehend von diesem Stand der Technik liegt der Erfindung die Aufgabe zugrunde, diese Nachteile zumindest teilweise zu vermeiden und ein eigenmediumgesteuertes Sicherheitsventil vorzusehen, welches einfacher ausgebildet ist und auch im Störfall kein Ausströmen des Mediums zulässt.

Erfindungsgemäß wird diese Aufgabe bei einem Sicherheitsventil der eingangs genannten Art dadurch gelöst, dass in dem Kanal ein elektrisch geschaltetes Pilotventil angeordnet ist. Erfindungsgemäß wird also der als Bypass ausgebildete Kanal über ein Pilotventil geregelt. Dieses Pilotventil kann z.B. durch einen Mediumsensor angesteuert werden, insbesondere einen Gassensor zur Prüfung des Mediumgehalts in der Umgebungsluft, der z.B. zur Ansteuerung eines Magnetventils eingesetzt werden kann. Bei Erfassung des Mediums, insbesondere Gas, in der Umgebungsluft, schließt das Pilotventil augenblicklich den Kanal und verhindert somit wirksam ein Austreten des Mediums in den Auslass des Sicherheitsventils. Eine gesonderte Austrittsöffnung des Pilotventils ist außerdem vorgesehen. Durch diese Austrittsöffnung strömt ein Mediumvolumen, das sich zum Öffnen des Sicherheitsventils unterhalb der Membran sammelte, beim Schließen des Sicherheitsventils aus. Es kann eine hohe Schließgeschwindigkeit des Sicherheitsventils bestimmt werden. Die eingangs beim Stand der Technik bemängelte Leckage wird somit vollständig vermieden. Durch die elektrische, insbesondere elektronische Ansteuerung kann die Ansteuerung auch zugangslos erfolgen, so dass bei einer Installation im Erdreich die Armatur nicht für etwaige, notwendige Unterbrechungen der Gaszufuhr, durch einen Revisionsschacht oder dergleichen frei zugänglich sein muss. Die vorgeschlagene Armatur stellt somit insbesondere eine Auf-/Zu-Armatur zur Realisierung einer leckagefreien Gasfreischaltung bereit. Damit erfüllt das Ventil die Funktion der HAE (Hauptabsperreinrichtung) nach DVGW-TRGI (Technische Regel für die Gasinstallation der deutschen Vereinigung des Gas- und Wasserfaches e.V.)

In der besonders bevorzugten Ausführungsform ist das Pilotventil ausgebildet zur Ansteuerung über Funk (GSM-Modul) oder durch einen Schalter (Revisions- bzw. Wartungsschalter). Durch diese Funktion kann das Sicherheitsventil auch manuell betätigt werden.

Bei einer besonders bevorzugten Ausbildung ist das Pilotventil als Drei/Zwei-Wegeventil ausgebildet, welches besonders vorteilhaft als stromlos geschlossenes oder NC-Ventil ausgestaltet ist. Unter Spannung lässt das Pilotventil das Medium durch den Bypasskanal vom Einlass zu dem Membrangehäuse strömen, so dass sich unterhalb der Membran ein Druck aufbaut. Dieser überwindet die auf das Schließelement wirkende Federkraft und öffnet den Hauptstrom des Sicherheitsventils. Ohne Netzspannung schließt das Ventil den Bypasskanal und lässt das Medium durch den Ventilauslass ausströmen, so dass die Federkraft das Schließelement schließt und somit den Hauptvolumenstrom unterbricht.

Bei einer alternativen Ausführungsform ist das Pilotventil mit einem bi- stabilen - Relais ausgestattet, so dass lediglich ein Impuls zur Umschaltung zwischen den Endlagern benötigt wird, in denen es ohne Leistungsaufnahme verbleibt. Folglich ist die Leistungsaufnahme nur zum Schalten erforderlich, nicht aber im Normalzustand. Das die Membran enthaltende Membrangehäuse kann aus Rohrleitungsmaterial, z. B. Messing oder Kupfer bestehen, so dass dieses einfach mit den Rohrleitungen verbunden werden kann. Alternativ kann das Membrangehäuse aus Kunststoff bestehen, z.B. aus einem faserverstärkten Kunststoff, wie z.B. glasfaserverstärktem Kunststoff.

Sicherheitstechnisch besonders vorteilhaft ist die automatische, elektr. Ansteuerung des Pilotventils, wenn eine bestimmte Temperatur (z.B. die Formbeständigkeitstemperatur vom eingesetzten Kunststoffrohr) überschritten wird. In diesem Fall wird die Funktion der TAE nach DVGW VP 301 erfüllt und die Absperreinrichtung eignet sich bevorzugt zum Einsatz in einer Kunststoffrohrinstallation. Im Vergleich zu den aus dem Stand der Technik bekannten TAE-Ventilen (thermisch absperrenden Ventilen), die üblicherweise ein Lot mit einer definierten Schmelztemperatur (z.B. 70 Grad Celsius) umfassen, welches beim Überschreiten dieser Schmelztemperatur durch Verflüssigung des Lots das Ventil schließt, ist das erfindungsgemäße TAE-Ventil reversibel, kann also ohne auswechseln der Einheit wieder betriebsbereit geschaltet werden.

Die vorgeschlagene Armatur kann mithin vollständig im Erdreich eingelassen sein. Bei dieser alternativen Ausführung ist in dem Membrangehäuse des Absperrventils ein Mittel vorgesehen, welches beim Absenken der Membran ein Nachströmen von Luft in den Abschnitt des Membrangehäuses oberhalb der Membran ermöglicht. Bei der bevorzugten Ausführungsform kann dieses in Form eines in dem Schließkegel vorgesehenen Kanals ausgebildet sein, welcher die Luft aus dem Abschnitt des Membrangehäuses oberhalb der Membran durch den Schließkegel und radial abgehend von der Hauptachse des Absperrventils zu einer im Erdreich verlegten und an das Absperrventil angeschlossenen Luftleitung führt.

Zur visuellen Überprüfung der Funktionsfähigkeit kann das Absperrventil ferner ein Indikatorelement aufweisen. Vorzugsweise umfasst dieses einen oberseitig auf der Membran angeordneten Indikatorstab, der in einer Durchtrittsöffnung in dem Deckel des Ventilgehäuses beweglich ist. Beim Anheben der Membran tritt das Indikatorelement durch die Öffnung und zeigt so die Funktionsfähigkeit des Sicherheitsventils an.

Weitere Einzelheiten, Vorteile und Merkmale der Erfindung lassen sich dem nachfolgenden Teil der Beschreibung entnehmen, in denen ein Ausführungsbeispiel des erfindungsgemäßen eigen- und /oder fremdmediumgesteuerten Sicherheitsventils anhand einer Querschnittszeichnung näher erläutert ist. Es zeigen:
- Fig. 1: eine schematische Seitenansicht eines Hausanschlusses mit einem innerhalb des Hauses angeordneten Sicherheitsventil;
- Fig. 2: einen vergrößerten Querschnitt des Sicherheitsventils und
- Fig.3: eine schematische Seitenansicht eines Hausanschlusses mit einem außerhalb des Hauses angeordneten Sicherheitsventil.

Gleiche oder entsprechende Bauteile sind mit den gleichen Bezugszeichen versehen.

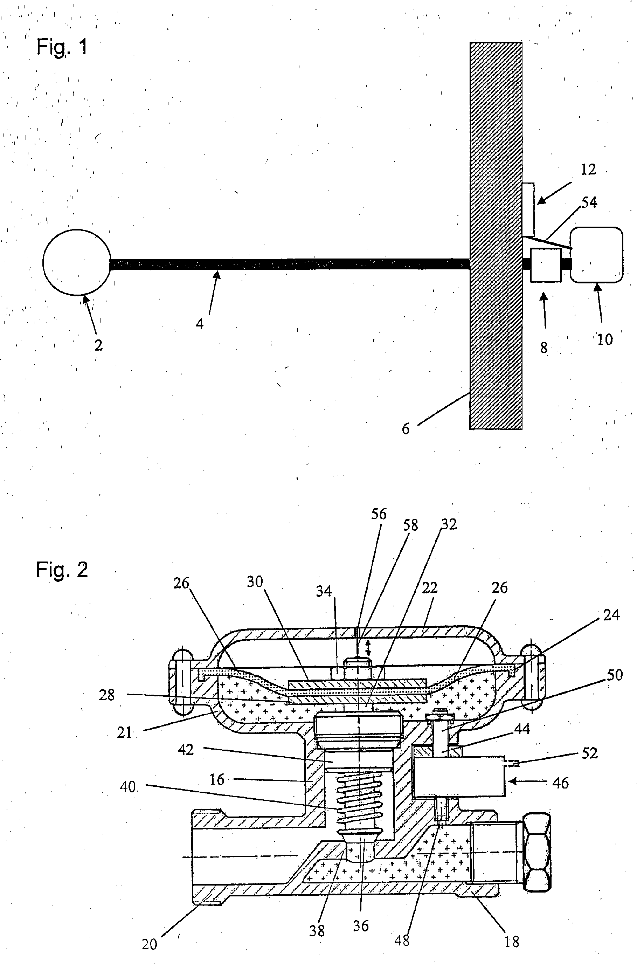

Gemäß Figur 1 ist das das Medium führende Hauptrohr 2 über eine Hauptanschlussleitung 4 mit einer hinter einer Kellerwand 6 liegenden Hauptabsperreinrichtung 8 verbunden. Bei dieser Ausführungsform ist das erfindungsgemäße Absperrventil 10 im Keller des Gebäudes angeordnet und mit einem an der Kellerwand 6 befestigten Wartungsschalter und/oder Gassensor 12 leitungsmäßig verbunden.

Das in Figur 2 vergrößert dargestellte Absperrventil besteht im Wesentlichen aus einem mittig zylindrisch ausgebildeten Ventilgehäuse, das am unteren Ende auf einer Seite mit einem Einlassstutzen 18 und kollinear zur Erstreckungsrichtung des Einlassstutzens 18 mit einem Auslassstutzen 20 versehen ist. An den Einlassstutzen 18 und den Auslassstutzen 20 sind die Rohrleitungen der Hauptanschlussleitung 4 angeschlossen. Am oberen Ende verbreitert sich das Ventilgehäuse 16 topfförmig zu einem Membrangehäuse 21, welches durch einen Ventilgehäusedeckel 22 über umfänglich angeordnete Nieten oder Schrauben verschlossen ist. In einer umlaufenden Ringnut eines Auflageflansches am oberen Ende des Membrangehäuses 21 ist ein umlaufender, hakenförmiger oder glatter Schenkel 24 einer elastischen Membran 26 zwischen dem Ventilgehäuse 16 und dem Ventilgehäusedeckel 22 eingeklemmt. Mittig wird die Membran 26 von einer unteren Montageplatte 28 und einer oberen Montageplatte 30 und durch ein zylindrisches Schließelement 32 mittig durchdrungen.

Das zylindrische Schließelement 32 weist am oberen Ende ein Außengewinde auf, auf welches eine Mutter 34 aufgeschraubt ist. Das zylindrische Schließelement 32 erstreckt sich vertikal durch das Membrangehäuse und ist an seinem unteren Ende mit einem Kegel 36 ausgebildet, der in Ruhestellung auf einem Dichtsitz 38 aufsitzt. Oberseitig auf den Kegel 36 wirkt eine Feder 40, die unterseitig unter Druck gegen einen Bund 42 anliegt.

In Ruhestellung drückt diese Feder 40 den Kegel 36 des Schließelements 32 auf den Dichtsitz 38, so dass durch den Einlassstutzen einströmendes Gas nicht zu dem Auslassstutzen 20 strömen kann. Ein Bypasskanal 44 verbindet den Einlassstutzen 18 mit dem unterhalb der Membran 26 gebildeten Raum des Membrangehäuses 21. Der Durchgang durch den Bypasskanal 44 wird über ein Drei-/Zwei-Wege-Magnetventil 46 gesteuert, welches leitungsmäßig verbunden ist mit einem Schalter, einem Gassensor oder einem kombinierten Gassensor/Schalter 12. Dieses Magnetventil 46 weist eine Einlassseite 48, eine Auslassseite 50 und eine Austrittsöffnung 52 auf.

In dem in Fig. 2 abgebildeten spannungsfreien Zustand ist das Magnetventil 46 geschlossen, so dass kein Gas von der Einlassseite 48 zur Auslassseite 50 strömt. Unter Spannung strömt das Gas von der Einlassseite 48 zur Auslassseite 50 und füllt so den Raum unterhalb der Membran 26 des Membrangehäuses 21 mit Gas. Dieses Gas hebt die Membran 26 und somit das Schließelement 32 unter Überwindung der Rückstellkraft der Feder 40 vertikal an, wodurch das Absperrventil öffnet und so den Hauptvolumenstrom von der Einlassstutzen 18 zum Auslassstutzen 20 freigibt.

Bei Erfassung einer bestimmten Gaskonzentration in dem Kellerraum durch den Gassensor 12 wird das das Magnetventil 46 spannungsfrei geschaltet, z.B. durch den Gassensor. Durch den Schalter kann der Gassensor zur Schließung des Ventils übersteuert werden, z.B. für Wartungsarbeiten. Das Gasvolumen unterhalb der Membran 26 strömt durch die gesonderte Austrittsöffnung 52 aus und das durch die Federkraft absenkende Schließelement 32 schließt das Sicherheitsventil. Dieser Schließvorgang dauert weniger als 5 Sekunden.Mittig in dem Ventilgehäusedeckel 22 ist eine Druckausgleichsöffnung 56 ausgebildet. Durch diese Druckausgleichsöffnung 56 tritt ein auf der Oberseite des Schließelements 32 befestigter Indikatorstab 58 hindurch. Damit ist die Bewegung der Membran 26 von außen visuell sichtbar und die Funktionsfähigkeit des Sicherheitsventils überprüfbar.

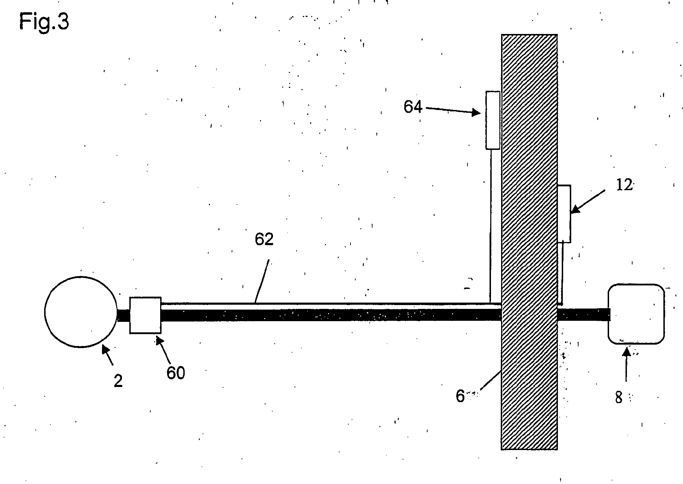

Bei der in Figur 3 dargestellten alternativen Ausführungsform ist das Sicherheitsventil 60 außerhalb des Kellerraums im Erdreich unmittelbar neben dem Hauptrohr 2 angeordnet. Der Vorteil dieser Ausführungsform liegt darin, dass der Hausanschluss einschließlich der Absperrvorrichtung im Haus nicht ausziehsicher ausgebildet sein muss zum Abfangen einer minimalen Auszugskraft von 30 kN im Falle eines ungewollten Angriffs auf die Hauptanschlussleitung, z.B. durch einen Bagger. Ein Rohr 62 führt die Steuerspannung von einem Notschalter 64 oberhalb des Erdreichs zu dem Magnetventil 46. Dieser Notschalter 64 dient zur Spannungsunterbrechung des Sicherheitsventils 60, so dass schlüssellos und ohne Werkzeug eine Unterbrechung der Gaszufuhr bewirkt werden kann. Über den Wartungsschalter 12, der vorzugsweise zudem einen Gassensor umfasst, kann im Keller die Gaszufuhr unterbrochen werden, z.B. zum Wechseln der Hauptabsperreinrichtung 8. Die Steuerung des Wartungsschalters und somit das Absperren des Absperrventils kann in einer Weiterentwicklung auch durch einen GSM-Schalter, beispielsweise durch einen Energieversorger oder dergleichen per Funk erfolgen.

Durch die Anordnung des Absperrventils außerhalb des Kellerraums gemäß der in Figur 3 dargestellten Ausführungsform kann im Extremfall auf eine Hauptabsperreinrichtung insgesamt verzichtet werden. Grundsätzlich kann aber durch das erfindungsgemäße Absperrventil auch bei der Ausführungsform gemäß Fig. 1 auf die Hauptabsperreinrichtung im Haus verzichtet werden.

Die Erfindung stellt somit ein besonders einfaches eigenmediumgesteuertes Absperrventil bereit, welches im Vergleich zum Stand der Technik ohne eine doppelwandige Rohrleitung auf der Auslassseite auskommt. Da das Magnetventil spannungsfrei schließt, wird bei einem Stromausfall auch augenblicklich die Gaszufuhr unterbrochen.

Der Gegenstand der vorliegenden Erfindung ergibt sich nicht nur aus dem Gegenstand der einzelnen Ansprüche, sondern aus der Kombination der einzelnen Ansprüche untereinander. Alle in den Unterlagen - einschl. der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

### Bezugszeichenliste

- 2: Hauptrohr
- 4: Hauptanschlussleitung
- 6: Kellerwand
- 8: Hauptabsperreinrichtung
- 10: Absperrventil
- 12: Wartungsschalter / Gassensor
- 16: Ventilgehäuse
- 18: Einlassstutzen
- 20: Auslassstutzen
- 21: Membrangehäuse
- 22: Ventilgehäusedeckel
- 24: Schenkel
- 26: Membran
- 28: untere Montageplatte
- 30: obere Montageplatte
- 32: Schließelement
- 34: Mutter
- 36: Kegel
- 38: Dichtsitz
- 40: Feder
- 42: Bund
- 44: Bypasskanal
- 46: Magnetventil
- 48: Einlassseite
- 50: Auslassseite
- 52: Austrittsöffnung
- 54: Rohr
- 56: Druckausgleichsöffnung
- 58: Indikatorstab
- 60: Sicherheitsventil
- 62: Rohr
- 64: Notschalter

## Patentansprüche

1. Eigenmediumgesteuertes Absperrventil mit einem Einlass für das Medium, einem Auslass für das Medium zur Weiterführung an einen Verbraucher, einer in einem Membrangehäuse (21) angeordneten Membran (26), die mit einem federgespannten Schließelement (32) zur Regelung des Hauptstroms des Mediums verbunden ist, und einem den Einlass mit dem Membrangehäuse (21) verbindenden Kanal (44) zur Regelung des Schließelements (32) und einem elektrisch geschalteten Pilotventil, das den Mediumstrom in dem Kanal steuert, wobei das Pilotventil eine gesonderte Austrittsöffnung (52) aufweist, **DADURCH GEKENNZEICHNET, dass** das Pilotventil mittels eines Gassensors (12) steuerbar ist.

2. Absperrventil nach Anspruch 1, **DADURCH GEKENNZEICHNET, dass** das Pilotventil als Drei-/Zwei-Wegeventil (46) ausgebildet ist.

3. Absperrventil nach einem der vorhergehenden Ansprüche, **DADURCH GEKENNZEICHNET, dass** das Pilotventil stromlos geschlossen ist.

4. Absperrventil nach einem der vorhergehenden Ansprüche, **DADURCH GEKENNZEICHNET, dass** das Membrangehäuse (21) aus Kunststoff besteht.

5. Absperrventil nach einem der vorhergehenden Ansprüche, **DADURCH GEKENNZEICHNET, dass** dieses als TAE-Ventil ausgebildet ist.

6. Absperrventil, insbesondere nach einem der vorhergehenden Ansprüche, **DADURCH GEKENNZEICHNET, dass** auf der Oberseite der Membran (26) ein Anzeigelement vorgesehen ist, das eine Öffnung in dem Membrangehäuse (21) durchdringt.

7. Absperrventil nach einem der vorhergehenden Ansprüche, **DADURCH GEKENNZEICHNET, dass** das Pilotventil mit einem bistabilen Relais ansteuerbar ist.

## Claims

1. Own-medium controlled blocking valve, comprising a medium inlet, a medium outlet for transferring said medium to a consumer, a diaphragm (26) disposed in a diaphragm housing (21) and connected to a springloaded closing element (32) for regulation of the medium main flow, and a passage (44) connecting said inlet to said diaphragm housing (21) for controlling said closing element (32), and an electrically switched pilot valve that controls the medium flow in said passage, said pilot valve comprising a separate discharge opening (52), **characterized in that** said pilot valve is controllable by means of a gas sensor (12).

2. Blocking valve according to claim 1, **characterized in that** said pilot valve is constructed as a three-/two-way valve (46).

3. Blocking valve according to one of the preceding claims, **characterized in that** the pilot valve is closed in a currentless manner.

4. Blocking valve according to one of the preceding claims, **characterized in that** diaphragm housing (21) is made of a synthetic material.

5. Blocking valve according to one of the preceding claims, **characterized in that** the same is constructed as a TAE valve.

6. Blocking valve, particularly according to one of the preceding claims, **characterized in that** on the top of the diaphragm (26) an indicating element is provided, which penetrates through an opening in said diaphragm housing (21).

7. Blocking valve according to one of the preceding claims, **characterized in that** said pilot valve is controllable by means of a bistable relay.

## Revendications

1. Soupape d'arrêt commandée par le fluide propre, comprenant une entrée de milieu, une sortie de milieu pour acheminer le milieu vers un consommateur, une membrane (26) disposée à l'intérieur d'une boîte de membrane (21) et reliée avec un élément de fermeture (32) sous tension de ressort pour le réglage du courant principal du milieu, et un canal (44) reliant ladite entrée avec la boîte de membrane (21) pour le réglage de l'élément de fermeture (32), et une soupape Pilote électriquement commutée, soupape qui commande le courant du milieu dans le canal, ladite soupape Pilote comprenant une ouverture de sortie séparée (52), **caractérisée en ce que** la soupape Pilote peut être commandée par le biais d'un détecteur de gaz (12).

2. Soupape d'arrêt selon la revendication 1, **caractérisée en ce que** la soupape Pilote est agencée comme une soupape à trois/deux orifices (46).

3. Soupape d'arrêt selon l'une des revendications précédentes, **caractérisée en ce que** la soupape Pilote est fermée sans courant.

4. Soupape d'arrêt selon l'une des revendications précédentes, **caractérisée en ce que** la boîte de membrane (21) consiste en matière plastique.

5. Soupape d'arrêt selon l'une des revendications précédentes, **caractérisée en ce que** ladite soupape est construite comme une soupape TAE.

6. Soupape d'arrêt, notamment selon l'une des revendications précédentes, **caractérisée en ce que** sur la face supérieure de la membrane (26) est prévu un élément d'affichage traversant une ouverture dans la boîte de membrane (21).

7. Soupape d'arrêt selon l'une des revendications précédentes, **caractérisée en ce que** ladite soupape Pilote peut être commandée avec un relais bistable.
